# EUROPEAN PATENT APPLICATION

(11) **EP 2 890 108 A1**
(43) Date of publication of application: **01.07.2015**
(21) Application number: 13306877.5
(22) Date of filing: 27.12.2013
(51) Int. Cl.: H04N 1/60, G06F 17/30

(54) **Method for sorting a group of images of a database and method for color correcting an image, corresponding devices, computer program and non-transitory computer-readable medium**

(71) Applicant: Thomson Licensing, 92130 Issy-les-Moulineaux (FR)
(72) Inventor: Hellier, Pierre, 35576 Cesson-Sévigné (FR); Sabater, Neus, 35576 Cesson-Sévigné (FR); Demoulin, Vincent, 35576 Cesson-Sévigné (FR)
(74) Representative: Huchet, Anne

(57) **Abstract**

The invention relates to a method for sorting a group of images of a database, the images of said group being called example images and being associated to a same scene.

According to the invention, said method comprises assigning (411) a score (*Scoreᵢ*) to at least one example image of said group, said score (*Scoreᵢ*) taking into account together:
- a value (*V_{sci},N_{sci}*) representing a space correspondence between said at least one example image and a source image (*Iₛ*) representing at least a part of the same scene as the example images of said group, and
- a piece of information (*C_{D},E,Eᵢ,D_{colorᵢ}*) representing at least a color distribution of at least one part of said source image (*Iₛ*).

## Description

### 1. Technical Field

The invention concerns the image processing, and in particular the video stream processing, a video stream comprising a sequence of images.

More specifically, the invention relates to image and video editing, especially regarding the colorimetry or color correction of images, and proposes, in particular, a color transfer method (or color mapping method) for building a color mapping function to map the colors of unaligned images.

Mapping the colors permits to transform the colors of an image, called a source image, by assigning to it the colors of an other image, called the reference image, by using said mapping function.

Such a color mapping can be used to retrieve an original image, whose colors have been changed ("reverse-engineering"), to match the colors of two versions of a same image or a same scene, said two version being obtained by using two separate capture devices with a possible different point of view, or to match the colors of two versions of the same image that have been transmitted in two different streams.

Indeed, one of the most common tasks in image processing is to alter an image's color to remove for example a dominant and undesirable color cast such as the yellow in photos taken under incandescent illumination.

Thus, the invention finds particular application in the content creation image or video type, especially during the post-production phase to finalize the color content before distribution or display.

### 2. Background Art

In general, image and video editing is performed, guided by the user, by using predefined filters implementing basic operations on image pixels, or on color histograms representing the distribution of colors in an image. For example, using the Adobe Photoshop^{®} graphics editing program developed and published by Adobe Systems, it is possible to learn how to remove a person from a photo using a clone tool, to make a black and white adjustment, to replace a sky, or to reduce the digital noise in a photograph ...

Such editing operations can be performed automatically using an editing automatic tool such as the magic wand for example in the tuning method provided by Picasa^{®}, which permits to adjust automatically the colors in a photo once the user has selected a neutral area of it. Other known automatic tools are also, for example, provided for color histogram equalization, or noise reduction.

Such editing operations can also be manually implemented by the user. For example, a user implements, step by step, a manual contrast adjustment or a manual tuning of a gamma correction, corresponding to a nonlinear operation used to code and decode luminance or tristimulus values (corresponding to spectral sensitivities of the three type of cone cells of the human eye) in video.

Alternatively, other editing methods consist in choosing examples images to perform the editing of source images. Such examples are chosen since they present characteristics of interest in terms of color, contrast, signal to noise ratio, resolution, etc.

Starting from these examples, two classes of methods are known to implement a modification of source image(s) of a video, called an example-guided video modification.

The first class comprises methods based on a global processing operating at a global scale, called global methods. For example, such global methods act on the color histogram of the source image/video, by taking into account a color histogram level for deforming the source color histogram so that it matches the histogram of the example image/video.

Two examples of such global methods are described respectively by E. Reinhard ("Color Transfer between Images "), IEEE Computer Graphics and Applications, vol 21, issue 5 Sept/oct 2001, and by F. Pitie ("N-Dimensional Probability Density Function Transfer and its Application to Color Transfer"), IEEE International Conference on Computer Vision, 2005, pages 1434-1439, Vol. 2.

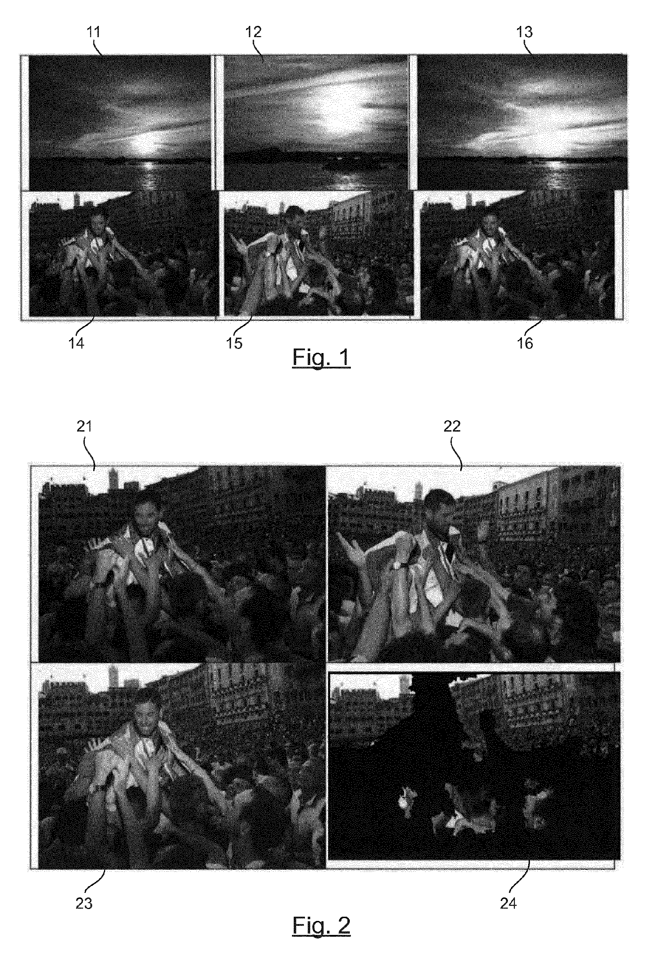

An implementation of these two examples of global method is applied on two different source images (11, 14) as illustrated by figure 1. The corresponding example images used for trying to enhance the source images are represented in the middle (12, 15), leading to the corresponding resulting images (13, 16) of the top raw using the global method described by E. Reinhard, and of the bottom raw using the global method described by Pitie.

As can be noted regarding this illustration of figure 1, the result obtained for the landscape of the top row is satisfactory, whereas the result obtained for the crowded scene of the bottom row is insufficient. Indeed, in comparison with the middle example image (15), the flash effect and a red unrealistic aspect (which can only be seen in shades of gray) of the source image (11) are not completely suppressed in the resulting image 16.

The second class of example-guided video modification method comprises local methods relying on the computation of spatial correspondences between the source and example images (or videos). Taking into account these correspondences, a transformation of the characteristics of the source image can be implemented, using for example a regression.

An example of such a local method is described by Y. HaCohen ("NRDC: Non-Rigid Dense Correspondence with applications for Image Enhancement"), ACM Transactions on Graphics (Proc. SIGGRAPH) August 2011.

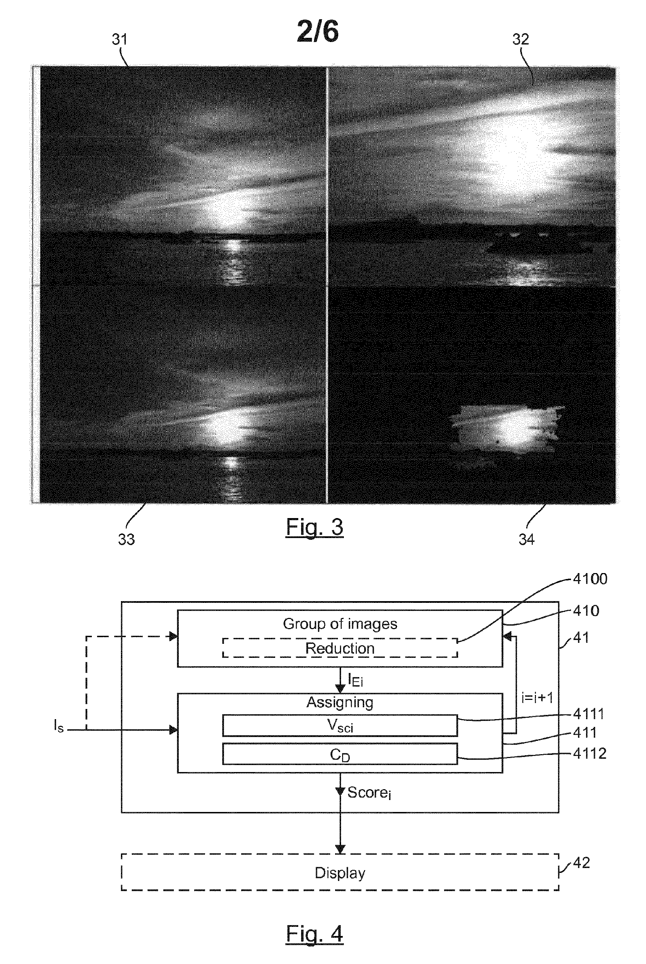

Figures 2 and 3 illustrate the result that can be obtained using such a local method for to type of scenes, a crowded scene and a landscape scene respectively.

In figure 2, the left image 21 on the top row is the source image to be corrected because of the flash effect and its red color aspect (which can only be seen in shades of gray), whereas the right image 22 on the top row corresponds to an example image of the same scene, retrieved on the internet, but captured at a different instant since the face of the "hero" is seen with a profile view whereas in the source image it is seen with a face view. Using a local method as described above, the corrected image 23 is obtained, where the color palette is closer from the one of the example image 22. The image 24 on the right of the bottom row represents the spatial map of the correspondences between the source image and the example image. As can be seen all the black areas are not used for the color correction.

Thus, it can be seen that when a sufficient number of spatial correspondences are found and if these correspondences are spread in different areas of the image, a good color correction can be obtained.

On the contrary, regarding the second example of application of a local method on a landscape source picture 31 as illustrated by figure 3, it can be seen that the resulting 33 image of the left bottom row is of poor quality regarding the example image 32. Indeed, regarding the image 34 on the right of the bottom row representing the spatial map of the correspondences between the source image and the example image, it can be seen that the number of correspondences is poor and localized only on the sun, thus almost no change can be brought by the local method.

Thus, it appears that none of the global or local method gives good result for every type of scene.

Indeed, on the one hand, the global methods perform well only when the number of objects in the scene is limited, or when there is no semantic links (in other words with dissimilar content) between the source and the example images, but present a limited and acceptable computational complexity for a large-scale use.

On the other hand, the local methods are preferred since they are expected to perform better than the global ones, when correspondences, between the source and the example images, are numerous and distributed throughout the spatial map of these images. However, even if these local methods are expected to capture better the relationship between the source and the example images, the computational complexity of such method is high and can even be prohibitive for large-scale usage.

Thus, the user has always to make a compromise to find the best way for enhancing the source image.

In addition, the inventors have detected that finding the best example image from a database, such as the one provided by Internet, is tedious and time consuming. Indeed, a Google^{®} query, does not ensure that the examples images comprise enough correspondences with the source image, and in addition that such correspondences are well distributed throughout the spatial map of the source image.

Thus, there remains a significant need for enhancing the sorting of images provided by a database, and for enhancing color correction of a source image presenting color defects.

### 3. Summary Of Invention

The invention proposes a new solution as a method for sorting a group of images of a database, the images of said group being called example images and being related to a same scene.

According to the invention, said method comprises assigning a score to at least two example image of said group, said score taking into account together:
- a value representing a space correspondence between said at least one example image and a source image representing at least a part of the same scene as the example images of said group, and
- a piece of information representing at least a color distribution of at least one part of said source image.

The sort of the images of a group of images according to the invention is therefore based on their space similarity with a source image, and takes also into account a color piece of information of the source image.

Indeed, such a sort of images related to a same scene permits to detect the best example image that can be provided by a database, starting from a source image representing at least a part of the same scene as the example images of said group.

As can be noted, such a sort depends not only on a spatial similarity between one example image and the source image, but also on the color distribution of the source image.

Consequently, for a same group of example images, but for two distinct source images the score of each example image will be different, since it depends on the used source image.

Indeed, such a "double-criterion" based on spatial correspondences between two images (i.e. an example image on the one hand and a source image on the other hand), and a color distribution of a source image, permits to detect the best example image, which can be used for a color transfer applied on the source image.

According to the present disclosure, a group of images related to a same scene means that two images of each pair of images, that can be found starting from the images of said group, share some common content (place, character, event ...), but may differ significantly due to a variety of factors, such as non-rigid changes in the scene, changes in lightning and/or in tone mapping, different type of cameras and lenses.

In addition, a source image according to the invention, can also belong to the same database as the example images or can be inputted by a user, for example from a personal database distinct from the database from which the example images are extracted, and represents at least a part of the same scene as the example images of said group. In other words, the source image shares at least one content with the other images of the group of images.

More specifically, such group of example images can be obtained beforehand thanks to a query on a public database, such as Internet, such query being based on this at least one common content.

Optionally, said method comprises also the display for visualizing the group of images ordered according to the decreasing order of score. Such a displaying can help to highlight quickly the best example image for a later color processing of the source image.

According to a particular aspect of the disclosure, said assigning of a score comprises the following:
- determining, at least one time, an entropy of the color distribution of at least one part of said source image,
   and for each example image of said group:
- determining spatial correspondence areas by aligning said example image with said source image, delivering a number representing the quality of the spatial correspondence areas,
- obtaining said score by implementing a linear combination of said entropy and said number representing the quality of the spatial correspondence areas.

According to such embodiment, it can be noted that the criterion based on a piece of information representing at least a color distribution of at least one part of said source image is determined independently from the criterion on a spatial similarity between one example image and the source image.

According to a first variant of such embodiment, the entropy of the color distribution of at least one part of said source image, and the number representing the quality of the spatial correspondences for the first considered example image, can be determined in parallel.

Or according to a second variant of such embodiment, the entropy of the color distribution of at least one part of said source image is first determined and then the number representing the quality of the spatial correspondence areas is determined for the first considered example image, or inversely.

It can be noted that according to the above variant, it is possible to determine only one time the entropy of the color distribution of at least one part of said source image, for example for the entire image, and then reuse it for determining the score associated to each example image.

According to a special aspect of said first embodiment, said determining an entropy of the color distribution of at least one part of said source image is implemented after each determination of spatial correspondence areas, said at least one part of said source image corresponding to the union of said spatial correspondence areas.

In other words, said assignment comprises the following, for each example image of said group:
- determining spatial correspondence areas by aligning said example image with said source image, said determination delivering a number representing the quality of the spatial correspondence areas,
- determining an entropy of a color distribution of the union of said spatial correspondence areas of said source image,
- obtaining said score by implementing a linear combination of said entropy and said number representing the quality of the spatial correspondence areas.

Thus, it can be noted that according to this special aspect of the first embodiment, the area of the source image for determining the entropy of its color distribution is limited to the correspondence areas that the source image comprises regarding the considered example image. In other words, the entropy of the color distribution of said source image is calculated only for the matching regions between said source image and the considered example image, and not for any part of the source image, or the entire source image, permitting thus to reduce the time and the complexity, which were involved for determining the entropy of the color distribution of the whole source image for example.

Advantageously, it can be noted that every step of this special aspect of said first embodiment can be run automatically, by a processor, without any intervention of a user.

Consequently, the determination of the entropy of the color distribution associated with the source image is implemented for each example images of said group, and the criterion based on a piece of information representing at least a color distribution of at least one part of said source image depends on the criterion on a spatial similarity between one example image and the source image and requires that this one is firstly determined for each example image.

According to a second embodiment, said assignment a score comprises the following:
- determining, at least one time, a first color distribution of at least one part of said source image,
   and for each example image of said group:
- determining a second color distribution of at least one part of said example image,
- determining and delivering a color distance between said first and said second color distributions,
- determining spatial correspondence areas by aligning said example image with said source image, delivering a number representing the quality of the spatial correspondence areas,
- obtaining said score by implementing a linear combination of said color distance and said number representing the quality of the spatial correspondence areas,
said first and second color distribution being obtained with a same color dictionary.

Advantageously, this second embodiment delivers the color distance between the source image color distribution, which can be represented by a histogram or a table, and the considered example image color distribution. Such color distance illustrates the quantity of color transfer that would be necessary if the considered example image is the best example among the example images of said group, and would be thus selected for the color correction of the source image.

Using a same color dictionary for determining the first color distribution associated with the source image, and each second color distribution associated with each example image is required so that the color distance between the first and second color distribution of a pair of images, comprising respectively the source image and a considered example image, is coherent.

Moreover, the color distance is determined independently from the criterion on a spatial similarity between one example image and the source image.

According to a first variant of such second embodiment, the first color distribution associated with said source image, and the second color distribution with the number representing the quality of the spatial correspondences for the first considered example image, can be determined in parallel.

Or according to a second variant of such embodiment, the first color distribution associated with said source image is first determined, and then the second color distribution with the number representing the quality of the spatial correspondence areas is determined for the first considered example image, or inversely.

It can be noted that according to the above variant, it is possible to determine only one time the first color distribution associated with said source image, and then reuse it for determining the score associated to each example image.

According to a special aspect of said second embodiment said determining of a first and a second color distribution of at least one part of said source image and of said example image respectively, are implemented after each determination of spatial correspondence areas, said at least one part of said source image and said at least one part of said example image corresponding, respectively, to the union of said spatial correspondence areas in said source image, and in said example image.

In other words, said assignment comprises, for each example image of said group:
- determining spatial correspondence areas by aligning said example image with said source image, said determination delivering a number representing the quality of the spatial correspondence areas,
- determining a first color distribution of the union of said spatial correspondence areas of said source image,
- determining a second color distribution of the union of said spatial correspondence areas of said example image,
- determining and delivering a color distance between said first and said second color distributions,
- obtaining said score by implementing a linear combination of said color distance and said number representing the quality of the spatial correspondence areas.

Thus, it can be noted that according to this special aspect of the second embodiment, the area of the source image and the considered example image for determining respectively the first and second color distribution is limited to the correspondence areas between the source image and the considered example image, and not for any part of the source and considered example images, or the entire source and considered example images, permitting thus to reduce the time and the complexity, which were involved for determining the first and color distribution of the whole source image for example.

Advantageously, it can be noted that every step of this special aspect of said second embodiment can be run automatically, by a processor, without any intervention of a user.

Consequently, the determination of the first color distribution associated with the source image is implemented for each example images of said group, and the color distance depends on the criterion on a spatial similarity between one example image and the source image and requires that this one is firstly determined for each example image.

According to a particular aspect of the present disclosure, said at least one part of said source image comprises color defects.

In other words, when the method does not imposes that said at least one part of said source image corresponds to the union of said correspondence areas, according to this aspect, the determining of the entropy of the color distribution according to the first embodiment, or of the first color distribution according to the second embodiment, is located on a zone, which is relevant if a later color correction is considered. Such part comprising color defects can correspond to an overexposed area due to the use of a flash of a capture device.

According to a particular aspect of the present disclosure, said at least one part of said source image is selected by the user.

Such aspect permits the user to control directly the sort of the example images by taking into account the area that he wants to correct in particular.

According to a particular aspect of the present disclosure, said number representing the quality of the spatial correspondence areas takes into account the number of spatial correspondence areas and their spatial distribution in the source image.

Thus, if the spatial correspondence areas are only localized in one reduced area of the image as can be seen in the image 34 of figure 3, the number representing the quality of the spatial correspondence areas will be low, whereas if the spatial correspondence areas are well distributed throughout the image 24 of figure 2, the number representing the quality of the spatial correspondence areas will be high.

According to one other aspect of the disclosure, said obtaining of said score by implementing a linear combination comprises assigning a predetermined weight for said entropy or for said color distance, and a predetermined weight for said number of spatial correspondence areas.

In other words, the score can be weighted in order to promote on the one hand a good correspondence between the source and the considered example image, or on the other hand color correction requirement of the source image.

Another aspect of the disclosure concerns a module for sorting a group of images of a database, the images of said group being called example images and being related to a same scene, said device comprising an entity for assigning a score to at least one example image of said group, said score taking into account together:
- a value representing a space correspondence between said at least one example image and a source image representing at least a part of the same scene as the example images of said group, and
- a piece of information representing at least a color distribution of at least one part of said source image.

Such a module for sorting a group of images of a database is particularly adapted to implement the method for sorting a group of images of a database as described above. It is for example integrated in a phone terminal, a computer, a tablet, etc.

Of course, this module will comprise the different features relating to the method for sorting a group of images according to the invention, which have been previously described and, which can be taken together or separately. Thus, the features and advantages of this device are the same as those of the method for sorting a group of images. Therefore, they are not described in more detail.

Another aspect of the disclosure concerns a method for color correcting at least one image, called a source image, said source image representing a scene, but comprising color defects.

According to the invention, said method for color correcting said source image comprises the following, being implemented successively:
- obtaining a group of images of a database, called example images, said example images being associated to the same scene as the one of the source image,
- sorting said example images of said group as previously described, said sorting assigning a score to at least one example image of said group, said score taking into account together:
   ■ a value representing a space correspondence between one example image and said source image, and
   ■ a piece of information representing at least the color distribution of at least one part of said source image.
- color correcting said source image by using, among said group of example images, the example image showing the highest score.

Thus, thanks to the invention, the color correction of a source image is improved comparing to the results obtained with the method for color correcting according to the prior art, since the best example image is selected for the color transfer applied to the source image.

Indeed, none of the techniques disclosed by the prior art discloses such a best example retrieval for color transfer.

According to one particular aspect of said method for color correcting said source image, said sorting comprises, for each example image of said group, determining spatial correspondence areas by aligning said example image with said source image, said spatial correspondence areas obtained for said example image showing the highest score being then reused for the following color correction.

Such aspect takes advantage of the prior sorting, since the correspondence areas detected during it are reused during the color correction for correcting geometric differences between the example and source images and therefore for improving the efficiency of the color transfer.

Another aspect of the disclosure concerns a device for color correcting at least one image, called a source image, said source image representing a scene, but comprising color defects, said device for color correcting said source image comprising:
- a module for obtaining a group of images comprising at least two images, called example images, said example images being associated to the same scene as the one of the source image,
- a module for sorting said example images of said group as previously described, said module for sorting assigning a score for each example image of said group, said score taking into account together:
   ■ a value representing a space correspondence between one example image and said source image, and
   ■ a piece of information representing at least the color distribution of at least one part of said source image.
- a module for color correcting said source image by using, among said group of example images, the example image showing the highest score.

Such a device for color correcting said source image is particularly adapted to implement the method for color correcting said source image as described above. It is for example integrated in a phone terminal, a computer, a tablet, etc..

Of course, this device will comprise the different features relating to the method for color correcting said source image according to the invention, which have been previously described and, which can be taken together or separately. Thus, the features and advantages of this device are the same as those of the method for color correcting said source image. Therefore, they are not described in more detail.

The disclosure further relates to a computer program product downloadable from a communication network and/or recorded on a medium readable by computer and/or executable by a processor, comprising program code instructions for implementing said method sorting a plurality of images of a database according, and/or for implementing the method for color correcting according to the present disclosure.

The disclosure also relates to a non-transitory computer-readable medium comprising a computer program product recorded thereon and capable of being run by a processor, including program code instructions for implementing said method sorting a plurality of images of a database according, and/or for implementing the method for color correcting according to the present disclosure.

Although examples of the invention have been described hereinabove in relation with a limited number of embodiments, those skilled in the art, when reading this description, will understand that other embodiments can be imagined without leaving the scope of this invention.

In particular, while not explicitly described, the present embodiments may be employed in any combination or sub-combination.

As will be appreciated by one skilled in the art, aspects of the present principles can be embodied as a device, method or computer readable medium. Accordingly, aspects of the present principles can take the form of an entirely hardware embodiment, an entirely software embodiment (including firmware, resident software, micro-code, and so forth), or an embodiment combining software and hardware aspects than can all generally be referred herein as a "circuit", "module", or "device". Furthermore, aspects of the present principles can take the form of a computer readable storage medium. Any combination of one or more computer readable storage medium(s) may be utilized.

A computer readable storage medium can take the form of a computer readable program product embodied in one or more computer readable medium(s) and having computer readable program code embodied thereon that is executable by a computer. A computer readable storage medium as used herein is considered a non-transitory storage medium given the inherent capability to store the information therein as well as the inherent capability to provide retrieval of the information therefrom. A computer readable storage medium can be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present principles can be applied, is merely an illustrative and not exhaustive listing as is readily appreciated by one of ordinary skill in the art: a portable computer diskette; a hard disk; a random access memory (RAM); a read-only memory (ROM); an erasable programmable read-only memory (EPROM or Flash memory); a portable compact disc read-only memory (CD-ROM); an optical storage device; a magnetic storage device; or any suitable combination of the foregoing.

Moreover, for example, it will be appreciated by those skilled in the art that the block diagrams presented herein represent conceptual views of illustrative system components and/or circuitry embodying the principles of the invention. Similarly, it will be appreciated that any flow charts, flow diagrams, state transition diagrams, pseudo-code, and the like represent various processes which may be substantially represented in computer readable storage media and so executed by a computer or processor, whether or not such computer or processor is explicitly shown.

### 4. Brief Description of Drawings

Other characteristics and advantages of embodiments of the invention shall appear when reading the following description, provided by way of a non-restricted and indicative example (all of the embodiments of the invention are not limited to the characteristics and advantages of the embodiments described hereinafter), and the annexed drawings, wherein:
- Figure 1, described with reference to prior art, illustrates an implementation of two examples of color transfer global method;
- Figures 2 and 3, described with reference to prior art, illustrate two examples of implementation of a color transfer local method;
- Figure 4 illustrate the general principle of the present technique,
- Figures 5A and 5B illustrate two variants of a first embodiment of the present technique,
- Figures 6 illustrates the determination of correspondence areas between a source and an example image,
- Figures 7A and 7B illustrate two variants of a second embodiment of the present technique,
- Figure 8 illustrate two different color distributions of a same image using or not a dictionary,
- Figure 9 illustrate the display of a group of images ordered according to the decreasing order of score obtained according to the present invention.
- Figure 10 represents the method for color correcting according to an embodiment of the present invention,
- Figures 11A and 11B present respectively the simplified structure of a module for sorting a group of images and a device for color correcting implementing respectively the method for sorting a group of images or the method for color correcting according to the invention.

### 5. Description of Embodiments

### 5.1 General Principle

The invention, according to its different embodiments, is first based on a score assigned, to an example image of a database to sort, depending both on a first criterion representing its space correspondence with a source image, and a second criterion corresponding to a piece of information representing at least a color distribution of at least one part of said source image.

Once an image database is sorted according to the present invention, the present disclosure proposes also a new color correcting method for improving the color rendering of a source image, by using the example image of the database which presents the highest score obtained thanks to the sorting method according to the invention.

In relation with figure 4, the main steps of the method for sorting a group of images of a database are detailed in the following.

First, a group of images is obtained (410), the images of said group being called example images and being related to a same scene. In other words, these images are sharing a common content and are for example gathered using a query, with a keyword related to said scene, on a web search engine, or in a personal picture database or a database shared by a group of users (shared content by friends on social networks) or a combination of public remote database (e.g. provided by the Internet) and local private database.

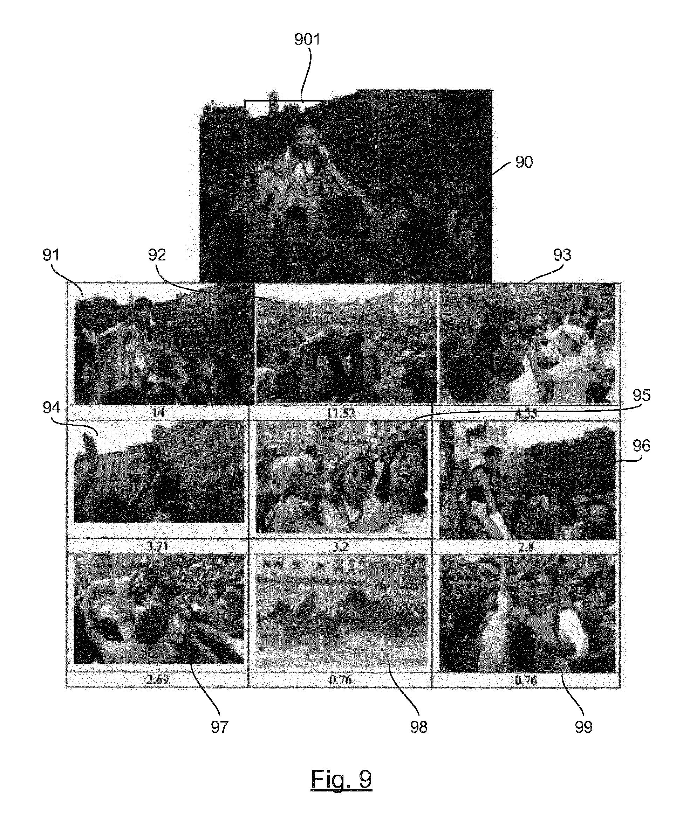

Such a group of images is for example illustrated by the example images (91, 92, 93, 94, 95, 96, 97, 98, 99) of figure 9, which are all related to the same event like the Palio di Siena.

For the query, the en user enter for example the keywords "Palio di Siena" on an image database to extract all the images related to this topic.

According to a variant, a source image *Iₛ* (90) could be used for a query based on image recognition, for example using the ViPR^{®} (Visual Pattern Recognition) technology, in order to detect the example images representing at least a part of the same scene as the source image *Iₛ*.

It is however possible that such an extraction delivers images that are off topic. Thus an optional reduction (4100) can be implemented for limiting the group of images to the one that are truly linked to the topic of the query.

Considering, such an optional reduction, it is thus possible that only a part of the group of images will be processed by the following assignment (411).

Such an assignment consists in associating each example image I_{Ei} of said part of the group of images (said part comprising N example images and *i* being an integer such that 1 ≤ *i* ≤ N), with a score called *Scoreᵢ.*

In order to achieve it, the score assignment (411) comprises two sub-steps for obtaining two criteria depending on a source image *Iₛ* representing at least a part of the same scene as the example images, which are both required for determining said *Scoreᵢ* associated with each example image I_{Ei}.

More precisely, these two sub-steps are on the one hand a sub-step of obtaining (4111) a value *V*_{sci} representing a space correspondence between the considered example I_{Ei} image and a source image *Iₛ*, and on the other hand a sub-step of obtaining (4112) a piece of information *C_{D}* representing at least a color distribution of at least one part of said source image *Iₛ*.

These two steps can be implemented in parallel, successively whatever the order between the two steps of obtaining.

Starting from these two obtained criteria the value *V_{sci}* and the piece of information *C_{D}*, the *Scoreᵢ* associated with the considered example image I_{Ei}, wil be delivered.

The obtaining (410) of a group of images, and assigning (411), form a sorting phase (41). Such a sorting phase (41) can be optionally completed by a display phase (42) for visualizing, through an interface, the group of images (or at least the part which has been kept after the optional reduction) ordered according to the decreasing order of score as illustrated by figure 9.

Such phases and steps are run automatically by a processor without any intervention of the user, which permits him to win substantial time.

More precisely, in figure 9, the best example image (91) regarding the source image (90) shows a score of 14. Indeed, as can be seen this image is taken with a different, but close, point of view and a different capture device (e. g. a camera) regarding the source image, but represents also the main character, which seems to be the winner of the Palio, quite in the center of the picture, with a background similar to the one of the source image.

The second example image (92) shows a score of 11.53. Indeed, even if the point of view is closed from the ones of the source image or of the best example image, this image is taken with a step back larger than the best example image (91).

The last example images 98 and 99 show a score of only 0,76, indeed these images are taken with a really different point of view regarding the source image (90).

### 5.2 Description of a first embodiment of the method for sorting a group of images

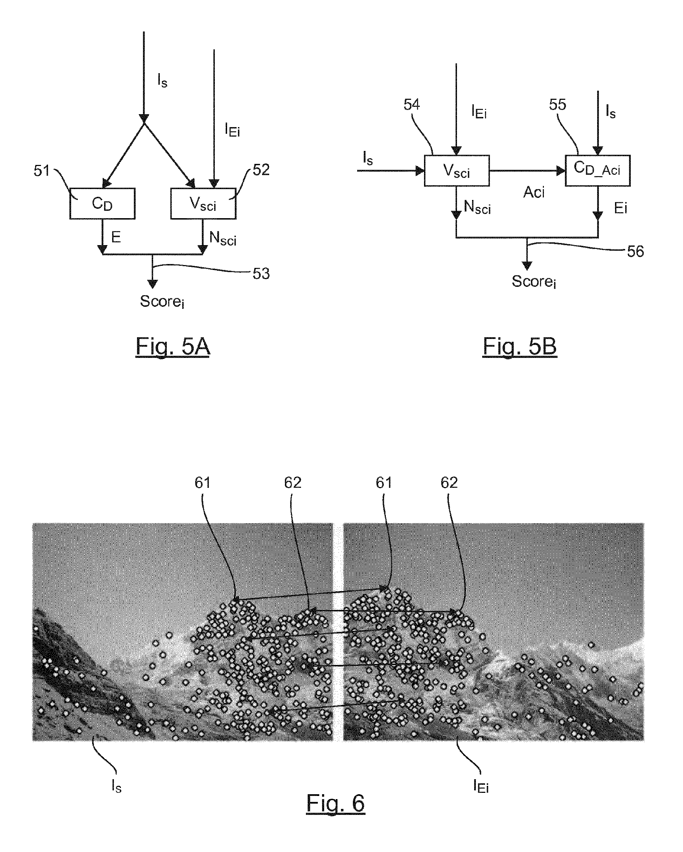

In relation with figures 5A and 5B, two variants of a first embodiment of the score assignment (411) are detailed in the following. This first embodiment is such that the color criterion depends only of the source image *Iₛ.*

Regarding figure 5A, a first variant of this first embodiment is illustrated in which said assignment (411) of a score *Scoreᵢ* to an example image I_{Ei}, comprises the following:
- determining (51), one time, an entropy (E) of the color distribution of at least one part of said source image *Iₛ*,
   and for each example image of said group:
- determining (52) spatial correspondence areas by aligning said example image with said source image, delivering a number (*N_{sci}*) representing the quality of the spatial correspondence areas,
- obtaining (53) said score by implementing a linear combination of said entropy (E) and said number (*N_{sci}*) representing the quality of the spatial correspondence areas.

Thus regarding, this first variant, the source image color criterion (E) is a constant for every example image I_{Ei} and can be independently determined. In other words the same source image color distribution entropy (E) is reused for each example image I_{Ei} with 1 ≤ *i* ≤ *N.*

However, it can be noted that such color criterion (E) changes if the considered source image is also changed.

Regarding this variant, the color distribution is determined for the entire source image, or for a part comprising color defects, which can be automatically detected by a processor. For example, such defect can correspond to a flash effect and a red unrealistic aspect (which can only be seen in shades of gray in image 90 as represented by figure 9).

According to another aspect, it is also possible that such a part is manually selected by a user, like the squared part (901) in image 90 if figure 9. Such an aspect permits the user to focus on the source image area that he wants to improve.

It can be noticed that such a remark, regarding the part of the source image for which the piece of information representing at least a color distribution, can also be applied to the variants/embodiments that will be described in the following of the disclosure.

The determination (52) of spatial correspondence areas by aligning said example image with said source image, delivering a number (*N_{sci}*) representing the quality of the spatial correspondence areas, can be implemented using known techniques, which implements for example the followings illustrated by figure 6 showing correspondence areas between a source (*Iₛ*) and an example image (I_{Ei}):
- extraction of interest points (61, 62) (called also "key points") of the source image *Iₛ*,
- extraction of the same interest points of the source image *Iₛ* in the example image I_{Ei}, and obtaining the local image descriptors of these interest points,
- comparison of descriptors associated respectively to the source image and to the example image to obtain couples of interest points (such couples being represented on figure 6 by arrows) with similar descriptors, a decision threshold can be implemented to provide a number of "good" couples,
- determining a deformation model (homographic or otherwise) for matching the points of interest of the source image with the points of interest of the example image (i.e. for transforming the source image into the example image by moving the points of the couples as previously obtained from their starting positions to their arrival positions),
- applying the deformation model to the source image to obtain a distorted (or warped) source image (i.e. aligned), which is geometrically similar to the example image.

For the key points extraction, which can be also called key point detection, several known techniques can be used such as: The Harris & Stephens / Plessey / Shi-Tomasi corner detection algorithm, the Features from accelerated segment test (FAST) technique, the Scale-invariant feature transform (SIFT), the Speeded Up Robust Features (SURF) technique, the Binary Robust Invariant Scalable Key points (BRISK)...

For the descriptors extraction and for matching the points of interest, the above SIFT and BRISK techniques can be for example implemented, or another technique like the Binary Robust Independent Elementary Features technique (BRIEF).

Once, the correspondence areas have been found, the number (*N_{sci}*) representing the quality of the spatial correspondence areas is delivered and optionally a spatial map of the correspondences between the source image and the example image is also delivered.

It has to be noticed that such a number (*N_{sci}*) representing the quality of the spatial correspondence areas takes into account the number of spatial correspondence areas and their spatial distribution in the source image. Thus, this number *N_{sci}* is for example a linear combination of the number *Nb_ca* of spatial correspondence areas and the entropy *E_{sd}* of their spatial distribution in the image, giving for example the following equation:
*N_{sci} = α.Nb_ca + β.E_{sd},* where *α* and *β* are some real weights, which are predetermined or set by the user.

Thus, if the spatial correspondence areas are only localized in one reduced area of the image as can be seen in the image 34 of figure 3, the number *N_{sci}* representing the quality of the spatial correspondence areas will be low like the entropy *E_{sd}*, whereas if the spatial correspondence areas are well distributed throughout the source image 2 of figure 2, the number representing *N_{sci}* the quality of the spatial correspondence areas will be high.

Optionally, other parameters could be added for computing the number *N_{sci}* representing the quality of the spatial correspondence between a source (*Iₛ*) and an example image (I_{Ei}), like for example the hour of capture of the image to take profit of a sunshine similarity for a following color transfer processing.

After determining (51) an entropy (E) of the color distribution of at least one part of said source image *Iₛ*, and for each example image of said group determining (52) spatial correspondence areas by aligning said example image with said source image, delivering a number (*N_{sci}*) representing the quality of the spatial correspondence areas, the obtaining (53) of said score by implementing a linear combination is implemented.

According to a special aspect, said obtaining of said score *Scoreᵢ* comprises assigning a predetermined weight for said entropy (E), and a predetermined weight for said number of spatial correspondence areas (*N_{sci}*). Thus, the *Scoreᵢ* is of the following form: *Scoreᵢ* = *w*₁*.E + w₂.N_{sci},* where *w*₁ and *w*₂ are some real weights, which are predetermined or set by the user

In other words, the score can be weighted in order to promote on the one hand a good correspondence between the source and the considered example image, or on the other hand color correction requirement of the source image.

It can be noticed that the above remarks regarding the number (*N_{sci}*) representing the quality of the spatial correspondence areas and the weighting of linear combination permitting to obtain the *Scoreᵢ* are also applicable to the variants/embodiments that will be described in the following of the disclosure.

Regarding figure 5B, a second variant of this first embodiment is illustrated in which said assignment (411) a score *Scoreᵢ* to an example image I_{Ei}, comprises the followings for each example image I_{Ei}, with 1 ≤ *i* ≤ *N* of said group comprising N images:
- determining (54) spatial correspondence areas by aligning said example image I_{Ei}, with said source image *Iₛ*, said determination delivering a number (*N_{sci}*) representing the quality of the spatial correspondence areas,
- determining (55) an entropy (*Eᵢ*) of a color distribution of the union (*Aci*) of said spatial correspondence areas of said source image,
- obtaining (56) said score by implementing a linear combination of said entropy and said number representing the quality of the spatial correspondence areas.

In other words, the obtaining of a piece of information *C_{D}* representing at least a color distribution of at least one part of said source image *Iₛ* corresponds to the determining of an entropy of the color distribution only of the correspondence areas *Aci* delivered by the previous determination (54) of spatial correspondences, and is this computed for each considered example image I_{Ei}. Thus, a different entropy (*Eᵢ*) of a color distribution for the source image *Iₛ* will be obtained from an example image to another.

The determination (54) of spatial correspondence areas can be implemented using one of the same known techniques as cited previously in relation with figure 5A.

Regarding the first variant of the first embodiment, it should be noted for example that since the entropy (E) of the color distribution of at least one part of said source image *Iₛ* is constant, its weight can be lower regarding the weight of the number (*N_{sci}*) representing the quality of the spatial correspondence areas.

### 5.3 Description of a second embodiment of the method for sorting a group of images

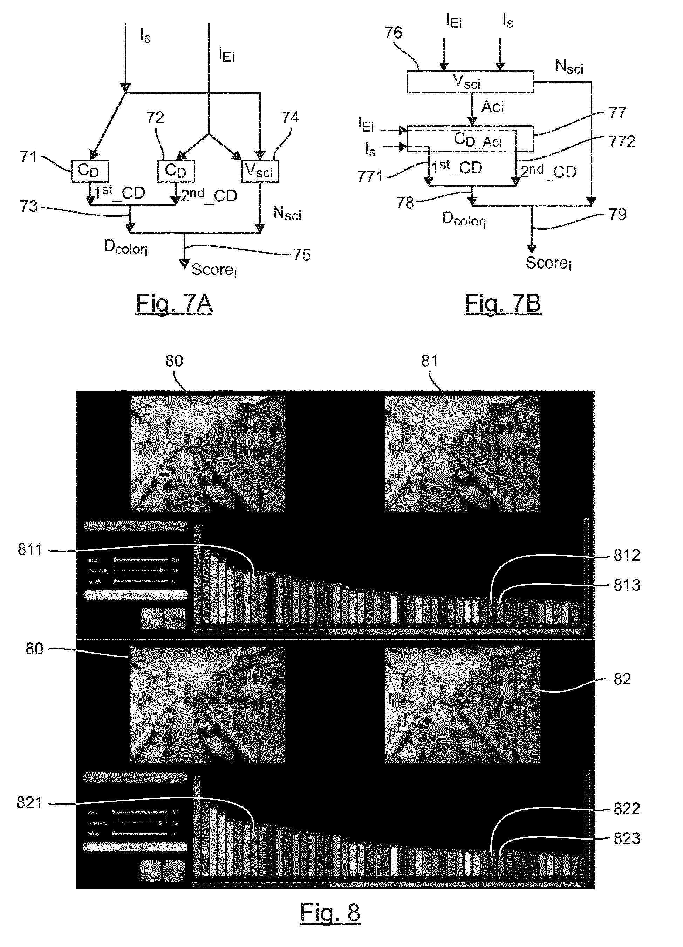

In relation with figures 7A and 7B, two variants of a second embodiment of the score assignment (411) are detailed in the following. This second embodiment is such that the color criterion depends both of the source (*Iₛ*) and the considered example image I_{Ei} by delivering a color distance *D_{colorᵢ}* the source (*Iₛ*) and the considered example image I_{Ei}, such a color distance *D_{covorᵢ}* illustrating the quantity of color transfer that would be necessary if the considered example image is the best example among the example images of said group, and would be thus selected for the color correction of the source image.

Regarding figure 7A, a first variant of this second embodiment is illustrated in which said assignment (411) of a score *Scoreᵢ* to an example image I_{Ei}, comprises the followings:
- determining (71) one time a first color distribution 1*^{st}_CD* of at least one part of said source image,
   and for each example image of said group:
- determining (72) a second color distribution 2*^{nd}_CD* of at least one part of said example image,
- determining (73) and delivering a color distance *D_{colorᵢ}* between said first 1*^{st}_CD* and said second color 2*^{nd}_CD* distributions,
- determining (74) spatial correspondence areas by aligning said example image with said source image, delivering a number (*N_{sci}*) representing the quality of the spatial correspondence areas,
- obtaining (75) said score *Scoreᵢ* by implementing a linear combination of said color distance *D_{colorᵢ}* and said number (*N_{sci}*) representing the quality of the spatial correspondence areas,
said first and second color distribution being obtained with a same color dictionary.

Thus regarding, this first variant, the source image color criterion, the first color distribution 1*^{st}_CD* is a constant for every example image I_{Ei} and can be independently determined. In other words the same source image first color distribution 1*^{st}_CD* is reused for each example image I_{Ei} with 1 ≤ *i* ≤ *N.*

Image color distribution can be represented by a color histogram as illustrated by figure 8. More precisely, figure 8 represents two types (81, 82) of color histogram that can be obtained starting from a same source image (80) representing a venetian canal.

The top color histogram 81 is obtained by scanning every pixel of the source image, and increasing in the same time the bin associated with a color tone when this color tone corresponds to the one of the scanned pixel. For the top histogram 81, each bin corresponds to a "true" color of the source image (80), whereas, for the bottom color histogram, each tone is defined by a standard color dictionary, a "dictionary" comprising to the set of tones of all the bins of the histogram.

This is the reason why some bins (811, 812, 813 corresponding to 821, 822, 823), are of different color (especially in the color image which is here reproduced in gray shades).

Regarding, the above second embodiment it is required to use a same dictionary (standard or not) for determining the first color distribution 1*^{st}_CD* of the source image *Iₛ* and the second color distribution 2*^{nd}_CD* of the considered example image I_{Ei}.

Regarding figure 7B, a second variant of this second embodiment is illustrated in which said assignment (411) of a score *Scoreᵢ* to an example image I_{Ei}, comprises the followings for each example image I_{Ei}, with 1 ≤ *i* ≤ *N* of said group comprising N images:
- determining (76) spatial correspondence areas by aligning said example image with said source image, said determination delivering a number representing the quality of the spatial correspondence areas,
- determining (771) a first color distribution 1*^{st}_CD* of the union of said spatial correspondence areas (*Aci*) of said source image *Iₛ*,
- determining (772) a second color distribution 2*^{nd}_CD* of the union of said spatial correspondence areas (*Aci*) of said example image I_{Ei},
- determining (78) and delivering a color distance *D_{colorᵢ}* between said first 1*^{st}_CD* and said second 2*^{nd}_CD* color distributions,
- obtaining (79) said score *Scoreᵢ* by implementing a linear combination of said color distance and said number representing the quality of the spatial correspondence areas.

In other words, the obtaining of a piece of information *C_{D}* representing at least a color distribution of at least one part of said source image *Iₛ* corresponds to the determining of a color distance *D_{colorᵢ}* taking into account the correspondence areas Aci delivered by the previous determining (76) of spatial correspondences, and is this computed for each considered example image I_{Ei}. Thus, a different first color distribution 1*^{st}_CD* for the source image *Iₛ* will be obtained from an example image I_{Ei} to another.

### 5.4 Description of an embodiment of the method for color correcting an image

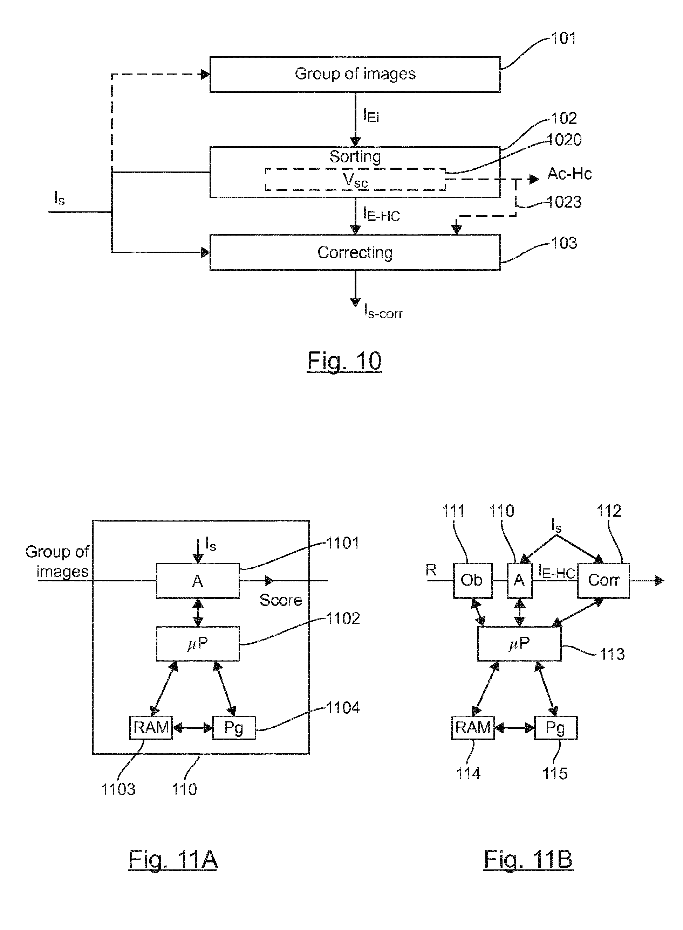

In relation with figure 10, the main steps of the method for color correcting an image, called a source image, said source image *Iₛ* representing a scene, but comprising color defects, are detailed in the following.

For example, imagine that an end user went on holiday at a famous place like the Mont Saint Michel with his family, but unfortunately, that day of visit the weather was not shiny, or the user had badly tuned the acquisition parameters of his camera. Thus, his own images and videos showing his family or any other personal subjects in that place need enhancement.

First, a group of N images of a database is obtained (101) in the same way as already described regarding the obtaining (410) described in the method for sorting a group of images of a database. Each of these images is called example image I_{Ei}, with 1 ≤ *i* ≤ N, said example images being associated to the same scene as the one of the source image.

Then, a sorting (102) of said example images of said group according to one of the above variant/embodiment is implemented, said sorting assigning a score *Scoreᵢ* to at least one example image I_{Ei} of said group, said score *Scoreᵢ* taking into account together:
■ a value (*V_{sci}, _{Nsci}*) representing a space correspondence between one example image and said source image *Iₛ*, and
■ a piece of information (*C_{D}*,*E*,*Eᵢ, D_{colorᵢ}*) representing at least the color distribution of at least one part of said source image.

Once the example images are sorted (102), the method implements a color correcting (103) of said source image *Iₛ* by using, among said group of example images, the example image *I_{E-HC}* showing the highest score delivering a corrected source image *I_{s-corr}*

Such a correcting can use for example the local methods of the prior art described by Y. HaCohen ("NRDC: Non-Rigid Dense Correspondence with applications for Image Enhancement"), ACM Transactions on Graphics (Proc. SIGGRAPH) August 2011, or the local method described by C. Barnes et al. ("PatchMatch: A Randomized Correspondence Algorithm for structural Image Editing") ACM Transactions on Graphics (Proc. SIGGRAPH) 28(3), August 2009 or other local methods well adapted for color correcting the considered source image.

Depending on the considered source image, the user can also define an optimized couple made of a keypoints extraction technique and a local color correcting method, like for example the couple (SIFT, NRDC)

It can be noticed that optionally, said sorting comprises, for each example image of said group, a determination (1020) of spatial correspondence areas by aligning said example image with said source image, and said spatial correspondence areas *Ac - Hc* obtained for said example image *I_{E-HC}* showing the highest score being then reused for the following color correction. Such reuse can indeed correct geometric differences between the example and source images and therefore improves the efficiency of the color transfer.

Such reuse requires a geometric check, which corresponds to a homographic estimation starting from the correspondence areas, as described by O. Chum et al ("The Geometric Error for Homographies "), Computer Vision and Understanding 97, 1, 2005, 86-102.

### 5.5 Global Structures of a module for sorting a group of images and a device for color correcting

Finally, figures 11A and 11B present respectively a simplified structure of a module for sorting a group of images, and a device for color correcting a source image comprising color defects, implementing respectively the method for sorting a group of images or the method for color correcting according to the invention.

Regarding figure 11A, a module (110) for sorting a group of images according to the invention comprises a memory 1103 comprising a buffer memory RAM, a processing unit 1102 equipped for example with a microprocessor µP and driven by the computer program 1104 implementing the method for sorting a group of images taking into account a source image *Iₛ* according to the invention.

At initialization, the code instructions of the computer program 1104 are for example loaded into a RAM and then executed by the processor of the processing unit 1102.

According to the invention, the microprocessor of the processing unit 1102 implements the method for sorting a group of images taking into account a source image *Iₛ* described here above according to the instructions of the computer program 1104. To this end, the module (110) for sorting a group of images, comprises an entity 1101 for assigning a score to at least one example image of said group, said score taking into account together a value representing a space correspondence between said at least one example image and a source image representing at least a part of the same scene as the example images of said group, and a piece of information representing at least a color distribution of at least one part of said source image.

Regarding figure 11B, a device for color correcting a source image comprising color defects according to the invention comprises a memory 114 comprising a buffer memory RAM, a processing unit 113 equipped for example with a microprocessor µP and driven by the computer program 115 implementing the method for color correcting a source image *Iₛ* according to the invention.

At initialization, the code instructions of the computer program 115 are for example loaded into a RAM and then executed by the processor of the processing unit 113.

According to the invention, the microprocessor of the processing unit 113 implements the method for sorting a group of images taking into account a source image *Iₛ* described here above according to the instructions of the computer program 115. To this end, the device for color correcting a source image comprising color defects, comprises a module (111) for obtaining a group of images comprising at least two images, called example images, said example images being associated to the same scene as the one of the source image, the module (110) for sorting said example images of said group of images represented by figure 11A, said module for sorting assigning a score for each example image of said group, said score taking into account together a value representing a space correspondence between one example image and said source image, and a piece of information representing at least the color distribution of at least one part of said source image, and a module for color correcting (112) said source image by using, among said group of example images, the example image *I_{E-HC}* showing the highest score.

## Claims

1. A method for sorting a group of images of a database, the images of said group being called example images and being related to a same scene,
wherein said method comprises assigning (411) a score (*Scoreᵢ*) to at least one example image (I_{Ei}) of said group, said score (*Scoreᵢ*) taking into account together:
- a value (*V_{sci},N_{sci}*) representing a space correspondence between said at least one example image and a source image (*Iₛ*) representing at least a part of the same scene as the example images of said group, and
- a piece of information (*C_{D}, E, Eᵢ, D_{colorᵢ}*) representing at least a color distribution of at least one part of said source image.

2. The method for sorting a plurality of images of a database according to claim 1, wherein said assignment (411) of a score comprises:
- determining (51, 55), at least one time, an entropy (*E, Eᵢ*) of the color distribution of at least one part of said source image (*Iₛ*),
and for each example image of said group:
- determining (52, 54) spatial correspondence areas by aligning said example image with said source image (*Iₛ*)*,* delivering a number (*N_{sci}*) representing the quality of the spatial correspondence areas,
- obtaining (53, 56) said score (*Scoreᵢ*) by implementing a linear combination of said entropy (*E, Eᵢ*) and said number (*N_{sci}*) representing the quality of the spatial correspondence areas.

3. The method for sorting a plurality of images of a database according to claim 2, wherein said determination (55) of an entropy of the color distribution of at least one part of said source image is implemented after each determination of (54) spatial correspondence areas, said at least one part of said source image (*Iₛ*) corresponding to the union (*Aci*) of said spatial correspondence areas.

4. The method for sorting a plurality of images of a database according to claim 1, wherein said assignment of a score comprises:
- determining (71, 771), at least one time, a first color distribution (*1^{st}_CD*) of at least one part of said source image (*Iₛ*)*,*
and for each example image of said group:
- determining (72, 772) a second color distribution (*2^{nd}_CD*) of at least one part of said example image,
- determining and delivering (78) a color distance (*D_{colorᵢ}*) between said first (1^{s}*^{t}_CD*) and said second (2*^{nd}_CD*) color distributions,
- determining (74, 76) spatial correspondence areas by aligning said example image with said source image, delivering a number (*N_{sci}*) representing the quality of the spatial correspondence areas,
- obtaining (75, 79) said score (*Scoreᵢ*) by implementing a linear combination of said color distance and said number representing the quality of the spatial correspondence areas,
said first and second color distribution being obtained with a same color dictionary.

5. The method for sorting a plurality of images of a database according to claim 4, wherein said determinations (771, 772) of a first and a second color distribution of at least one part of said source image (*Iₛ*) and of said example image respectively, are implemented after each determination (76) of spatial correspondence areas, said at least one part of said source image and said at least one part of said example image corresponding, respectively, to the union (*Aci*) of said spatial correspondence areas in said source image, and in said example image.

6. The method for sorting a plurality of images of a database according to anyone of the claims 2 or 4, wherein said at least one part of said source image (*Iₛ*) comprises color defects.

7. The method for sorting a plurality of images of a database according to anyone of the claims 2, 4 or 6, wherein said at least one part (910) of said source image (*Iₛ*) is selected by the user.

8. The method for sorting a plurality of images of a database according to anyone of the claims 2 to 7, wherein said number (*N_{sci}*) representing the quality of the spatial correspondence areas takes into account the number (*Nb_ca*) of spatial correspondence areas and their spatial distribution (*E_{sd}*) in the source image (*Iₛ*).

9. The method for sorting a plurality of images of a database according to anyone of the claims 2 to 8, wherein said obtaining of said score (*Scoreᵢ*) by implementing a linear combination comprises assigning a predetermined weight for said entropy or for said color distance, and a predetermined weight for said number of spatial correspondence areas.

10. A module (110) for sorting a group of images of a database, the images of said group being called example images and being related to a same scene,
wherein said module (110) comprises an entity (1101) for assigning a score to at least one example image of said group, said score taking into account together:
- a value (*V_{sci},N_{sci}*) representing a space correspondence between said at least one example image and a source image (*Iₛ*) representing at least a part of the same scene as the example images of said group, and
- a piece of information (*C_{D}, E, Eᵢ, D_{colorᵢ}*) representing at least a color distribution of at least one part of said source image *Iₛ*.

11. A method for color correcting at least one image, called a source image, said source image representing a scene, but comprising color defects,
wherein said method for color correcting said source image comprises the following, being implemented successively:
- obtaining (101) a group of images of a database, called example images, said example images being associated to the same scene as the one of the source image,
- sorting (102) said example images of said group according to one of claims 1 to 9, said sorting assigning a score to at least one example image of said group, said score taking into account together:
■ a value (*V_{sci}, N_{sci}*) representing a space correspondence between one example image and said source image (*Iₛ*), and
■ a piece of information (*C_{D}, E, Eᵢ, D_{colori}*) representing at least the color distribution of at least one part of said source image (*Iₛ*).
- color correcting (103) said source image by using, among said group of example images, the example image showing the highest score.

12. The method for color correcting according to claim 11, wherein said sorting comprises, for each example image of said group, determining (1020) spatial correspondence areas by aligning said example image with said source image (*Iₛ*)*,*
said spatial correspondence areas obtained for said example image showing the highest score being then reused for the following color correcting.

13. A device for color correcting at least one image, called a source image, said source image representing a scene, but comprising color defects,
wherein said device for color correcting said source image comprises:
- a module (111) for obtaining a group of images comprising at least two images, called example images, said example images being associated to the same scene as the one of the source image (*Iₛ*),
- a module (110) for sorting said example images of said group according to claim 10, said module for sorting assigning a score for each example image of said group, said score taking into account together:
■ a value (*V_{sci}, N_{sci}*) representing a space correspondence between one example image and said source image (*Iₛ*)*,* and
■ a piece of information (*C_{D}, E, Eᵢ, D_{colori}*) representing at least the color distribution of at least one part of said source image (*Iₛ*).
- a module (112) for color correcting said source image by using, among said group of example images, the example image showing the highest score.

14. A computer program product downloadable from a communication network and/or recorded on a medium readable by computer and/or executable by a processor, comprising program code instructions for implementing the method for sorting a plurality of images of a database according to one of claims 1 to 9, and/or for implementing the method for color correcting according to one of claims 11 or 12.

15. A non-transitory computer-readable medium comprising a computer program product recorded thereon and capable of being run by a processor, including program code instructions for implementing the method for sorting a plurality of images of a database according to one of claims 1 to 9, and/or for implementing the method for color correcting according to one of claims 11 or 12.
